# EUROPEAN PATENT APPLICATION

(11) **EP 3 579 162 A1**
(43) Date of publication of application: **11.12.2019**
(21) Application number: 19162077.2
(22) Date of filing: 12.03.2019
(51) Int. Cl.: G06Q 10/08

(54) **MARKET-LINKED DELIVERY SYSTEM**

(30) Priority: 04.06.2018 KR 20180064203
(71) Applicant: Ko, Chang Sin, Seoul 01189 (KR)
(72) Inventor: Ko, Chang Sin, Seoul 01189 (KR)
(74) Representative: Cabinet Chaillot

(57) **Abstract**

The present invention relates to a market-linked delivery system, and more particularly, to a market-linked delivery system capable of checking whether or not delivery is normally performed in a delivery process by detecting a change in impact and temperature/humidity and a change in appearance of products occurring in the delivery process and providing information thereon to a recipient, and of promoting entry activation by providing a market to an allocated banner area while providing a special delivery person with a maximum profit from delivery costs and offering a same-day delivery service.

## Description

### BACKGROUND OF THE INVENTION

### Field of the Invention

The present invention relates to a market-linked delivery system, and more particularly, to a market-linked delivery system capable of checking whether or not delivery is normally performed in a delivery process by detecting a change in impact and temperature/humidity and a change in appearance of products occurring in the delivery process and providing information thereon to a recipient, and of promoting entry activation by providing a market to an allocated banner area while providing a special delivery person with a maximum profit from delivery costs and offering a same-day delivery service.

### Description of the Related Art

With the conversion of a post office-driven parcel delivery system into a private enterprise-driven delivery system, there has been a great change in logistics systems for small packages. Through the introduction of the private enterprise-driven delivery system, the distribution and delivery of small or large packages are vitalized between individuals, between enterprises and individuals, and between enterprises, which forms a driver of the national economy now.

In addition, there is often a need to deliver very small packages or documents on the same day, which thus makes a quick delivery service using motorcycles that is currently active.

However, it typically takes two days to deliver packages even within a close distance, for example from Seoul to Suwon, in an existing delivery system because packages are collected in one place and then divided and sorted for each region to send the sorted packages to a relevant region, and the packages are distributed to subregions in that region to be delivered by delivery persons. Hence, it is impossible to utilize the existing delivery system when there is a need for same-day delivery.

Meanwhile, the quick delivery service may be used when there is a need for same-day delivery, but it costs too much and particularly incurs a considerable expense for a remote region. In addition, the quick delivery service is disadvantageous in that very long-distance delivery, for example, the long-distance delivery from Seoul to Cheonan is substantially impossible.

Meanwhile, an existing used product transaction is at a risk of fake trade because it is separately performed through a marketing site and a delivery system and selling products are not surely verified. In addition, the existing used product transaction is disadvantageous in that payment is late at the time of payment through secure payment.

Accordingly, a delivery system, if introduced, will be very useful to all users since the delivery system enables products to be delivered on the same day at an appropriate cost regardless of location in the case of delivery service and enables selling products to be verified and delivered on the same day as well as fast payment in the case of product transaction between individuals.

### SUMMARY OF THE INVENTION

The present invention has been made in view of the above-mentioned problems, and an object thereof is to provide a market-linked delivery system capable of performing same-day delivery and secure payment at low cost and of promoting entry activation by providing a market to an allocated banner area.

The present invention has the following features to accomplish the above object.

In accordance with an aspect of the present invention, a market-linked delivery system includes a main server that performs registration and authentication of delivery persons and receives a delivery request for delivery to designate a delivery person for the delivery request and collect delivery status information of the delivery person for transmission of the delivery status information at the time of request, a delivery person terminal that accesses the main server for data communication therewith to perform a delivery person registration process for delivery, to transmit delivery person designation intention information at the request of specific delivery to the main server, and to receive a delivery person designation notification from the main server, a client terminal that accesses the main server for data communication therewith to request delivery of intended products and receive delivery information on the delivery request from the main server, and an IoT complex sensor module that generates first state information, which is attached on a product to be delivered at a delivery starting point as the current state information of the product, to transmit the first state information to the delivery person terminal, and generates second state information, as the current state information of a product to be delivered at the time of arriving at a delivery destination, to transmit the second state information to the delivery person terminal.

The main server comprises a delivery personnel management server that manages authentication and registration of delivery persons and delivery person designation through data transmission and reception with the delivery person terminal, a delivery management server that manages delivery of a product at a customer's request through data transmission and reception with the client terminal, and a payment management server that manages payment for delivery, settlement of delivery costs for delivery personnel, and payment and settlement according to B2B, B2P, and P2P.

The delivery management server requests input of delivery information, which includes a delivery destination, a delivery starting point, an intended delivery date and time, and a recipient, when there is a delivery request from the client terminal, and may receive the delivery information when the delivery information is normally input to generate a delivery number and provide the delivery number to the client terminal.

The delivery management server transmits delivery information to the delivery personnel management server when it receives a delivery request from the client terminal, and the delivery personnel management server transmits relevant delivery information and request delivery person designation intention information to a plurality of registered delivery person terminals.

The delivery personnel management server compares GPS information of the delivery person terminals or base station information with delivery information of a product to be delivered for rapid delivery to transmit the delivery information and request delivery person designation intention information to a delivery person terminal that is within a set distance from a delivery starting point or a delivery destination.

The delivery personnel management server divides an entire path into a plurality of divided paths when a delivery starting point and a delivery destination are farther than the set distance to transmit delivery information and request delivery person designation intention information to a delivery person terminal for each relevant divided path.

The IoT complex sensor module may consist of a selected one of a temperature/humidity sensor, an impact sensor, an on-off sensor for determining whether a product delivering box is open or closed, and a crack sensor for detecting a crack of a product, or a combination thereof.

The crack sensor may include a slider body disposed at one side where a crack occurs, a plurality of PIO ports spaced from the slider body, a spring member fastened to one end of each of the PIO ports, and a plurality of power terminals disposed at the other side where a crack occurs such that each of the power terminals comes into contact or non-contact with one end of the associated spring member depending on the movement of the spring member.

The main server may provide a dedicated delivery application to the delivery person terminal or the client terminal when there is a request therefrom, and the dedicated delivery application may be downloaded to and executed in the delivery person terminal or the client terminal.

The payment management server may be connected to an external financial institution server to settle costs and perform any one of payment and settlement of delivery costs and payment and settlement of freight costs and delivery costs.

When there is a delivery person registration request from a delivery person terminal, the delivery personnel management server may transmit a specific personal code to the delivery person terminal when it requests input of identification information of a delivery person and registration of the delivery person is completed through the input identification information.

When delivery person designation notification information is received to the delivery person terminal from the delivery personnel management server, a delivery label may be attached on a product to be delivered when the product is collected after arriving at a delivery starting point and its image information may be transmitted to the delivery management server through a dedicated delivery application.

The delivery person terminal may transmit signature information input from a recipient of a product to be delivered after arriving at a delivery destination to the delivery management server, and the delivery management server may transmit delivery completion together with the signature information to the client terminal.

When it is intended to designate delivery persons for a plurality of divided paths and delivery designation intention information of a first delivery person terminal which enables delivery through a partial path of the entire delivery path is received, the delivery personnel management server may transmit delivery information and a request for delivery intention information to a delivery person terminal, which is within the set distance, for a remaining delivery path except for the above path.

When first and second delivery person terminals are respectively designated for two divided paths and the first delivery person terminal meets with the second delivery person terminal, the first delivery person terminal may transmit image information on a transferred product to the delivery management server to notify of transfer completion and the second delivery person terminal may transmit image information on an acquired product to the delivery management server to notify of reception completion.

In payment and settlement of freight costs and delivery costs, a product purchase cost and a delivery cost may be settled in the payment management server from the client terminal, delivery request information may be transmitted to the delivery management server such that the information is received through the delivery management server when the settlement is normally completed, delivery information may be transmitted to the delivery personnel management server for delivery when the delivery information is normally input to the delivery management server, product purchase confirmation information may be transmitted to the payment management server when the delivery is normally completed and the product purchase confirmation information is received from the client terminal, and the payment management server may send a product purchase cost of the costs settled from the client terminal to a relevant product seller.

When the product purchase confirmation information is not received from the client terminal, the payment management server may send a cost except for the delivery cost of the costs settled from the client terminal through designated account information.

The market-linked delivery system may further include a market management server to provide franchise information to the client terminal.

The market management server may include a franchise management unit that lists up franchise information to be provided to the client terminal connected thereto and determines whether or not to permit the entry according to the entry request, a payment management unit that manages a payment process for product information of a relevant franchise in connection with the payment management server when a purchase request occurs in the client terminal through the franchise information provided to the client terminal by the franchise management unit, and a delivery management unit that allows the product, which has been paid by the payment management unit, to be delivered according to the delivery information transmitted from the client terminal in connection with the delivery management server and the delivery personnel management server.

The franchise management unit may provide franchise information to the client terminal in the form of a web page, and the web page may be configured such that a left or right banner space is defined on the page that performs functions such as delivery request or delivery person registration to output the franchise information to the banner space.

The franchise management unit may allow the banner space to be allocated to a franchise.

### BRIEF DESCRIPTION OF THE DRAWINGS

FIG. 1 is a schematic diagram illustrating a delivery system according to an embodiment of the present invention.
FIG. 2 is a block diagram illustrating a configuration of the delivery system according to the embodiment of the present invention.
FIG. 3 is a diagram illustrating a crack sensor according to the embodiment of the present invention.
FIG. 4 is a block diagram illustrating a market-linked delivery system according to another embodiment of the present invention.
FIG. 5 is a flowchart illustrating a process of registering a special delivery person according to the present invention.
FIG. 6 is a flowchart illustrating a short-distance delivery process according to the present invention.
FIG. 7 is a flowchart illustrating a long-distance delivery process according to the present invention.
FIG. 8 is a flowchart illustrating a process of secure payment and delivery in a product transaction.

### DETAILED DESCRIPTION OF THE PREFERRED EMBODIMENTS

The attached drawings for illustrating exemplary embodiments of the present invention will be referred to in order to obtain a sufficient understanding of the present invention, the merits thereof, and the objects accomplished by the implementation of the present invention.

The terminology used in the present disclosure is for the purpose of describing particular embodiments only and is not intended to limit the invention. As used in the disclosure and the appended claims, the singular forms "a", "an" and "the" are intended to include the plural forms as well, unless context clearly indicates otherwise. It will be further understood that the terms "comprises/includes" and/or "comprising/including" when used in this specification, specify the presence of stated features, integers, steps, operations, elements, components, and/or groups thereof, but do not preclude the presence or addition of one or more other features, integers, steps, operations, elements, components, and/or groups thereof.

In certain embodiments, detailed descriptions of constructions or functions well known in the art may be omitted to avoid obscuring appreciation of the invention by a person of ordinary skill in the art.

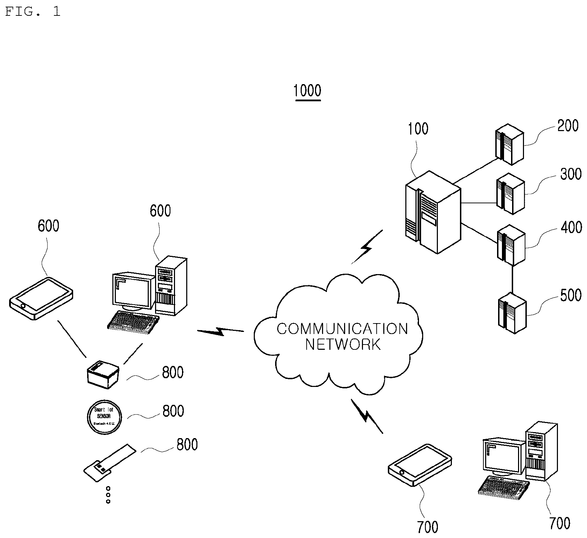

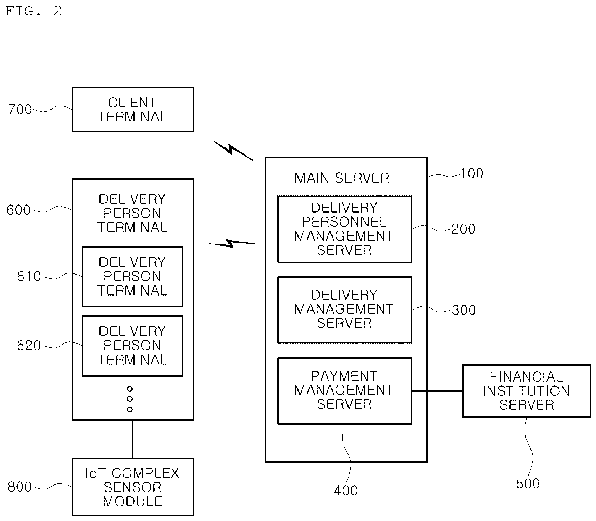

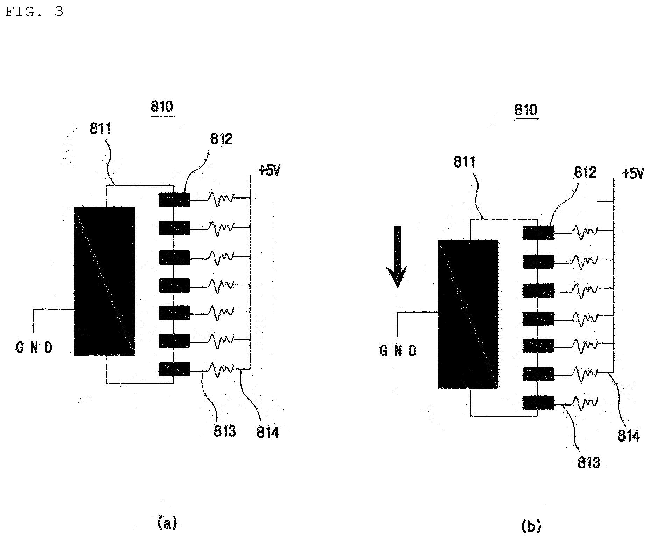

FIG. 1 is a schematic diagram illustrating a delivery system according to an embodiment of the present invention. FIG. 2 is a block diagram illustrating a configuration of the delivery system according to the embodiment of the present invention. FIG. 3 is a diagram illustrating a crack sensor according to the embodiment of the present invention.

Referring to the drawings, the delivery system, which is designated by reference numeral 1000, according to the embodiment of the present invention includes a main server 100 that performs registration and authentication of delivery persons and receives a delivery request for delivery to designate a delivery person for the delivery request and collect delivery status information of the delivery person for transmission of the information at the time of request, a delivery person terminal 600 that accesses the main server 100 for data communication therewith to perform a delivery person registration process for delivery, transmit delivery person designation intention information at the request of specific delivery to the main server 100 and receive a delivery person designation notification from the main server 100, a client terminal 700 that accesses the main server 100 for data communication therewith to request the delivery of intended products and receive delivery information on the delivery request from the main server 100, and an IoT complex sensor module 800 that generates first state information, which is attached on a product to be delivered at a delivery starting point as the current state information of the product, to transmit the first state information to the delivery person terminal 600, and generates second state information, as the current state information of a product to be delivered at the time of arriving at a delivery destination, to transmit the second state information to the delivery person terminal 600.

Here, the IoT complex sensor module 800 is provided to detect a change in product state information from when a product is acquired by a delivery person and to when the product is transferred to a final recipient during delivery to provide the recipient or client with the change in product state information. Consequently, it is possible to eliminate controversial factors that may occur in the delivery process as product damage in the delivery process can be checked through sensor data.

The IoT complex sensor module 800 consists of a selected one of a temperature/humidity sensor, an impact sensor, an on-off sensor for determining whether a product delivering box is open or closed, and a crack sensor 810 for detecting a crack of a product, or a combination thereof.

Here, the on-off sensor may be a sticky sensor that is attached to a packing means such as a packing box of a product in the form of a security seal label to detect the detachment or damage of the product.

The crack sensor 810 includes a slider body 811 disposed at one side where a crack occurs, a plurality of PIO ports 812 spaced from the slider body 811, a spring member 813 fastened to one end of each of the PIO ports 812, and a plurality of power terminals 814 disposed at the other side where a crack occurs such that each of the power terminals 814 comes into contact or non-contact with one end of the associated spring member 813 depending on the movement of the spring member 813.

Accordingly, when the slider body 811 installed at one side where a crack occurs moves, the plurality of PIO ports 812 are pulled down to see how much the slider body 811 moved, and the length of the crack as well as whether or not the crack occurs can be detected through the slider body 811.

The IoT complex sensor module 800 generates first state information, which is attached on a product to be delivered at a delivery starting point by a delivery person as the current state information of the product, to transmit the first state information to the delivery person terminal 600, and the delivery person terminal 600 transmits the first state information to the delivery management server 300.

In addition, the IoT complex sensor module 800 generates second state information, as the current state information of the product having arrived at a delivery destination, to transmit the second state information to the delivery person terminal 600, and the delivery person terminal 600 transmits the second state information to the delivery management server 300. Thus, the delivery management server 300 compares the first state information with the second state information to determine whether or not delivery is normally performed and provides a result of the determination to the recipient or the client terminal 700.

Meanwhile, the main server 100 is provided to manage the overall process of delivery such as delivery request from the client terminal 700 as well as membership registration and authentication in the delivery person terminal 600. The main server 100 includes a delivery personnel management server 200 that manages authentication and registration of delivery persons and delivery person designation through data transmission and reception with the delivery person terminal 600, a delivery management server 300 that manages delivery of products at a customer's request through data transmission and reception with the client terminal 700, and a payment management server 400 that manages payment for delivery, settlement of delivery costs for delivery personnel, and payment and settlement according to B2B, B2P, and P2P.

The delivery personnel management server 200 manages information on a plurality of delivery persons such that, when there is a request for delivery, the delivery personnel management server 200 receives delivery person designation intention information according to delivery information transmitted to the delivery person terminal 600 of a suitable delivery person to designate a specific delivery person for delivery through that delivery person.

This delivery personnel management server 200 is connected to the delivery person terminal 600 for data communication therewith to receive a request for delivery person registration from the delivery person terminal 600, in which case it provides an input interface to input delivery person identification information to the delivery person terminal 600, wherein the delivery person identification information is personal information and includes, for example, individual human information such as addresses, movable regions, whether or not having vehicles, mobile numbers to be registered, and deposit account information. Here, the vehicles include drones, which have emerged as a major vehicle in recent years, in addition to cars, trucks, and motorcycles.

More specifically, after a delivery person selects a main delivery region as a category and inputs detailed delivery conditions (whether or not having vehicles, a list of products that can be handled, etc.) through his/her delivery person terminal 600, the delivery person inputs types of delivery (rapid delivery, next-day delivery) suitable for his/her own conditions (possible time zone or possible day of the week) and conditions according to the same and provides them to the delivery personnel management server 200.

To this end, when there is a request for delivery person registration in the delivery person terminal 600 or a request for delivery from the client terminal 700, it is preferable that the main server 100 provides a dedicated delivery application such that the dedicated delivery application is downloaded to and executed in the delivery person terminal 600 or the client terminal 700.

Thus, the delivery person terminal 600 or the client terminal 700 is connected to the main server 100 by driving the dedicated delivery application when accessing the main server 100, to easily and rapidly perform an inquiry about various types of information, transmission and reception of request information, etc. through the interface of the application.

Meanwhile, when it is determined that the delivery person identification information has been normally input to the delivery personnel management server 200 at the request for delivery person registration from the delivery person terminal 600, the delivery personnel management server 200 transmits a specific personal code to that delivery person terminal 600.

Since the access and login to the dedicated delivery application are performed through the above personal code, a repeated separate authentication process may be omitted.

In the case where a plurality of delivery person terminals 600 has been registered in the delivery personnel management server 200, when a delivery request is received through the delivery management server 300 in the future, the delivery information, which is transmitted together at the time of the delivery request, is transmitted to the registered delivery person terminals 600 so that delivery person designation intention information is received from the delivery person terminals 600.

In this case, it is preferable that the delivery personnel management server 200 compares GPS information of the delivery person terminals 600 or base station information with delivery information of products to be delivered for rapid delivery to transmit delivery information and request delivery person designation intention information to a delivery person terminal 600 that is within a set distance from a delivery starting point or a delivery destination.

For example, the delivery information is transmitted and the delivery person designation intention information is requested to the delivery person terminal 600 that is within 1 km in the case of the delivery person walking with no vehicle or within 3 km in the case of the delivery person using any vehicle (including a car, a motorcycle, a truck, or a drone).

In this way, the delivery personnel management server 200 transmits delivery person designation notification information to a delivery person terminal 600, which transmits a designation intention thereto in order of arrival, from among the delivery person terminals 600 receiving the request for delivery person designation intention information, and delivery is performed through the delivery person terminal 600 which receives the designation notification information.

Although the delivery person terminal 600, which transmits a designation intention to the delivery personnel management server 200 in order of arrival, is selected herein, a different delivery person terminal 600 may also be selected by determining a degree of agreement between the delivery-enabled conditions input through the delivery person terminal 600 and the delivery request conditions input through the client terminal 700.

By comparing the delivery-enabled conditions input through the delivery person terminal 600 with the delivery request conditions input through the client terminal 700 in real time, the transaction of delivery may be achieved by one-to-one connection between a sender and a delivery person who provides the most proximate condition. Thus, it is possible to realize convenience and economy of time without a need to search for a provider that meets the condition by providing the transaction of delivery in a bidirectional manner in real time. In addition, since there is no unfairness to comply with unreasonable conditions, it is possible to establish a win-win strategy that creates economical and temporal benefits for both the sender and the delivery person.

In contrast, when delivery is requested from a plurality of delivery person terminals 600, one of the delivery person terminals 600 may be designated through an auction method or a reverse auction method.

In other words, by application of the auction/reverse auction method, a sender who requests the delivery sets basic delivery information including a starting point, a destination, and a stop, and conditions of delivery persons, and then requests a delivery purchase by automatic intermediation or manual intermediation in the auction or reverse auction method. In response, a delivery person automatically or manually bids for the delivery purchase request satisfying the conditions of delivery persons set in advance. Consequently, the intermediation can be made at reasonable rates and conditions and the delivery can be rapidly performed.

Meanwhile, when a delivery starting point and a delivery destination are farther than the set distance, the delivery personnel management server 200 divides an entire path into a plurality of paths to transmit delivery information and request delivery person designation intention information to a delivery person terminal 600 for each relevant divided path.

When it is intended to designate delivery persons for a plurality of divided paths, the delivery personnel management server 200 may sort delivery paths to designate a delivery person terminal 600 for each delivery path. In another embodiment, the delivery personnel management server 200 receives delivery designation intention information of a first delivery person terminal 610 which enables delivery through a partial path of the entire delivery path and transmits delivery information and a request for delivery intention information to a delivery person terminal 600, which is within the set distance, for a remaining delivery path except for the above path, with the consequence that a second delivery person terminal 620 or another delivery person terminal may be designated to be in charge of delivery through the remaining path.

Meanwhile, the delivery management server 300 is provided to manage delivery of products at a customer's request through data transmission and reception with the client terminal 700. The delivery management server 300 requests input of delivery information, which includes a delivery destination, a delivery starting point, an intended delivery date and time, and a recipient when delivery is requested from the client terminal 700, and receives the delivery information when the delivery information is normally input to generate a delivery number and provide the delivery number to the client terminal 700.

More specifically, when a sender who wants to send a product accesses the delivery management server 300 through his/her client terminal 700 to select a transaction type of product to be sent (at least one of marine transportation, air transportation, and inland transportation), select a product type and a product type category, input a detailed product name, and then input conditions such as transportation cost and transportation date and time suitable for him/her, the delivery management server 300 enables a delivery person to check the above contents by access through his/her delivery person terminal 600.

Thus, the delivery management server 300 transmits delivery information to the delivery personnel management server 200 when it receives a delivery request from the client terminal 700, and the delivery personnel management server 200 transmits the delivery information and requests delivery person designation intention information to a plurality of registered delivery person terminals 600.

Here, the delivery information includes information of a sender and a recipient, information of a product to be sent, price information of a product to be sent, delivery starting point information, a delivery destination information, and the like.

Meanwhile, the payment management server 400 is provided to manage payment for delivery, settlement of delivery costs for delivery personnel, and payment and settlement according to B2B, B2P, and P2P. The payment management server 400 is connected to an external financial institution server 500 to settle costs and perform any one of payment and settlement of delivery costs and payment and settlement of freight costs and delivery costs.

That is, the payment will be a delivery cost when only a delivery request is generally received, whereas the payment will be a product purchase cost, namely a sum of a freight cost and a delivery cost, when product purchase and delivery are requested together according to an embodiment of the present invention.

Here, in the payment and settlement of freight costs and delivery costs, a product purchase cost and a delivery cost are settled in the payment management server 400 from the client terminal 700. When the settlement is normally completed, delivery request information is transmitted to the delivery management server 300 such that the information is received through the delivery management server 300. When delivery information is normally input to the delivery management server 300, this information is transmitted to the delivery personnel management server 200 for delivery. When the delivery is normally completed and product purchase confirmation information is received from the client terminal 700, this information is transmitted to the payment management server 400. The payment management server 400 sends the product purchase cost of the costs settled from the client terminal 700 to a relevant product seller.

Of course, when the product purchase confirmation information is not received from the client terminal 700, the payment management server 400 will send a cost except for the delivery cost of the costs settled from the client terminal 700 through designated account information.

Meanwhile, as described above, the delivery person terminal 600 accesses the main server 100 for data communication therewith, to perform the delivery person registration process for delivery, transmit delivery person designation intention information at the request of specific delivery to the main server 100, and receive a delivery person designation notification from the main server 100. When the delivery person designation notification is received, the delivery person having a relevant delivery person terminal 600 delivers products according to the relevant delivery information and transmits each of product acquisition information and product transfer information to the delivery management server 300.

Here, the transmission of the product acquisition information is achieved by attaching a delivery label on a product to be delivered when the product is collected after a delivery person terminal 600 arrives at a delivery starting point, and transmitting image information on the product to the delivery management server 300 through the dedicated delivery application. The transmission of the product transfer information is achieved by receiving signature information from a recipient of the delivered product after the delivery person terminal 600 arrives at a delivery destination and transmitting the signature information to the delivery management server 300.

In this case, the delivery management server 300 notifies of delivery completion by transmitting the delivery completion together with the signature information to the client terminal 700.

As described above, in the case where each of the first and second delivery person terminals 610 and 620 are designated for each divided path, when the first delivery person terminal 610 meets with the second delivery person terminal 620, the first delivery person terminal 610 transmits image information on the transferred product to the delivery management server 300 to notify of transfer completion and the second delivery person terminal 620 transmits image information on the acquired product to the delivery management server 300 to notify of reception completion.

Meanwhile, as described above, the client terminal 700 accesses the main server 100 for data communication therewith to request the delivery of intended products and receive delivery information on the delivery request from the main server 100.

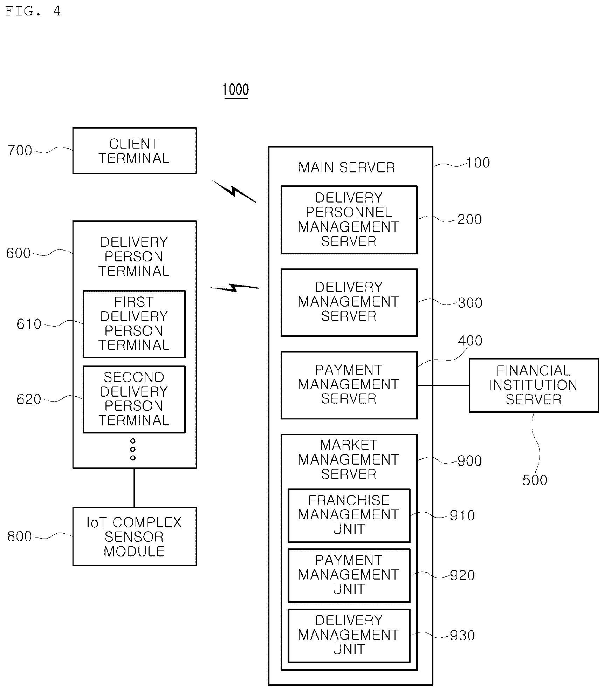

FIG. 4 is a block diagram illustrating a market-linked delivery system according to another embodiment of the present invention.

Referring to the drawings, the market-linked delivery system, which is designated by reference numeral 1000, according to another embodiment of the present invention includes a market management server 900 to provide franchise information to a client terminal 700.

Here, the market management server 900 includes a franchise management unit 910 that lists up franchise information to be provided to the client terminal 700 connected thereto, a payment management unit 920 that manages a payment process for product information of a relevant franchise in connection with a payment management server 400 when a purchase request occurs in the client terminal 700 through the franchise information provided to the client terminal 700 by the franchise management unit 910, and a delivery management unit 930 that allows the product, which has been paid by the payment management unit 920, to be delivered according to the delivery information transmitted from the client terminal 700 in connection with a delivery management server 300 and a delivery personnel management server 200.

Here, when an entry request is received from various franchises, the franchise management unit 910 transmits the entry request to a separate manager terminal (not shown) so that the manager terminal determines whether or not to permit the entry request and transmits entry permission information to the franchise management unit 910.

Thus, when the entry request is accepted by the entry permission information, the franchise management unit 910 provides franchise information on the accepted entry request, wherein the franchise information is included together in the franchise information provided to the client terminal 700. On the other hand, when the entry request is not accepted, the franchise management unit 910 transmits result information to a franchise which requests the entry such that the franchise can check the result information.

The franchise management unit 910 provides franchise information to the client terminal 700 in the form of a web page. The web page may be configured such that a left or right banner space is defined on the page that performs functions such as the delivery request or delivery person registration of the above delivery system 1000 to output the franchise information to the banner space or a separate franchise page is created to provide a plurality of types of franchise information to the client terminal 700.

In addition, the franchise management unit 910 allocates the banner space to the franchise.

To this end, when a large number of franchises want to be allocated a banner space, the franchise management unit 910 allows a senior allocation requestor or a franchise that submits a maximum allocation price to be allocated the banner space.

Here, the completion of the allocation means that the cost generation is terminated by the payment of the allocation cost once. Therefore, the franchise is able to develop stable business activity without paying an annual advertising cost for banner advertisement or being pressured due to an increase in advertising cost.

The franchise management unit 910 provides an advertisement space selling function for allowing the franchise that is allocated an advertisement space in the form of a banner to sell the allocated banner advertisement space to other franchises.

When the banner advertisement space is allocated as described above, the franchise that is allocated the banner advertisement space may sell it to other franchises, thereby enabling the market-linked delivery system to be activated.

Meanwhile, examples of the franchise may include street restaurants, service area restaurants, handmade grocery stores, overseas direct purchase agency markets, and the like.

In the case where street restaurants are opened, the street restaurants on the main street such as Myeong-dong or Noryangin are permitted to join as a franchise so that street food such as fish-shaped buns, cup rice, and chicken skewers is instantly paid by the payment management unit 920 at the request of the client terminal 700 and immediately delivered by the delivery management unit 930.

In the case of service area restaurants, in order to solve a problem that is lots of time and money constraints to eat service area food, the service area restaurants are permitted to join as a franchise so that service area food, which has increased rapidly in popularity on the broadcast in recent years, may be delivered to a client through the delivery system of the present invention using tour bus drivers, truck drivers, or the like, who often visit service areas, as delivery persons.

In the case of handmade grocery stores that mainly sell food through blogs, the same delivery service as an existing delivery application may be provided to eat side dishes on that evening by placing an order on the same day. In the case of overseas direct purchase agency markets, overseas direct purchases may be easily and simply delivered in such a manner that people who come back from abroad are registered as delivery persons to deliver products booked in advance.

On the other hand, a method of purchasing products from abroad and then registering the products in the market management server 900 for sale may be adopted. It is possible to easily purchase foreign famous chocolate, special edition products sold only in the specific city, and the like.

For example, if people want to purchase a Starbucks tumbler sold in Paris, France, it is possible to use a method of uploading request information to the market management server 900 to make a request to people who return from a business trip to Paris.

In this situation, the banner may consist of banners representing respective upper concepts of the street restaurant, the service area restaurant, the handmade grocery store, the overseas direct purchase agency market, and the like, instead of representing one franchise.

These banners represent a street restaurant, a service area restaurant, a handmade grocery store, an overseas direct purchase agency market, etc., respectively. When each of the banners is clicked, sub-franchises corresponding thereto are displayed as a plurality of banners. Here, these banners re called extendible banners.

These extendible banners classify product categories according to stages to display a plurality of items of an upper-level classification list. When one banner advertisement of the items is selected, a plurality of lower levels of that item is displayed and an item of the next lower-level list may be selected.

When a mouse is put on the item image of the upper-level classification list, an event occurs and the layer associated with that item is activated to display a lower-level classification list. When the mouse is put on the item image of the lower-level classification list, the layer associated with that item is activated on the right side of the item image to display a banner advertisement included in the layer.

When the banner consists of the above extendible banners, it is possible to resolve a problem that lowers concentration on the content transmitted by the web page due to too many banners on the web page and to give franchises more advertisement opportunities.

Since franchises are advertised together with the franchises of the same category, it is possible to easily attract interest and maximize advertising effects.

In this situation, the banner may consist of window-type banners representing various franchises such as department stores, instead of representing one franchise.

When each of these window-type banners is clicked, a large number of banners of the franchises selling various products included in the relevant window-type banner are displayed.

Since the franchises that offer various products are concentrated on the window-type banners just like department stores selling various products, it is possible to provide a consumer with an opportunity to select different products and request delivery with a single click.

Meanwhile, when there is a purchase request according to franchise information, the payment management unit 920 transmits information on payment and settlement of costs and delivery costs of a relevant purchase product to the payment management server 400. When payment confirmation information is received from the payment management server 400, the delivery management unit 930 transmits delivery information on that product, received from the client terminal 700, to the delivery management server 300. When this information is normally input to the delivery management server 300, the delivery management server 300 transmits the delivery information to the delivery personnel management server 200 for delivery. When the delivery is normally completed and product purchase confirmation information is received from the client terminal 700, this information is transmitted to the payment management server 400. The payment management server 400 sends the product purchase cost of the costs settled from the client terminal 700 to a relevant product seller.

The delivery personnel of the present invention use general persons instead of the special delivery persons employed in an existing courier service. This is similar to an existing food delivery company in terms of using general persons. However, the existing food delivery company uses persons having vehicles such as motorcycles for rapid delivery, but there is no constraint on the delivery persons of the present invention. That is, ordinary civilians, taxi drivers, truck drivers, etc. may be used as the delivery persons, and it doesn't matter whether or not they have vehicles.

First, the process of registering delivery persons according to the present invention will be described below.

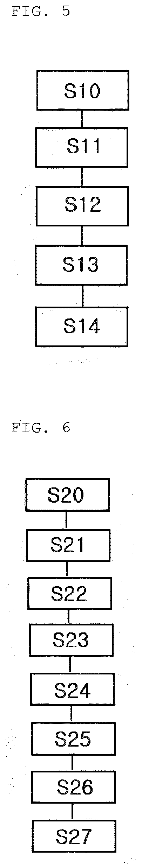

Referring to FIG. 5, a general person who wants to be registered as a delivery person first accesses the delivery system through an Internet web page provided from the main server 100 (S10). Then, the person inputs personal information, for example individual human information such as an address, and information such as movable regions, whether or not having vehicles, a mobile number to be registered, and a deposit account (S11). Then, the person completes membership registration after performing personal authentication through an accredited certificate and an authentication means (S12), and obtains a personal code (S13). Then, the person downloads a dedicated delivery application to a registered mobile phone and then logs in with the issued personal code (S14). For the sake of accuracy, mobile phone authentication is performed through the registered mobile phone when the application is downloaded. Through these steps, the process of registering delivery persons is completed.

Next, the process of sending products will be described below.

A person who wants to deliver a product to a specific region first accesses the delivery system of the present invention through a computer or a mobile phone Internet and then requests delivery (S20). In this case, the person who requests delivery may request delivery regardless of whether or not to join the delivery system as membership. When the delivery is requested, information on a sender and a recipient, information on a product to be sent, and information on the price of the product to be sent are input. In this case, when a sender address differs from a delivery request address, the delivery request address is put. Then, a delivery number is provided from the delivery system to a delivery requester (S21).

Then, special delivery persons are notified through the dedicated delivery applications that there is a product to be delivered (S22). In this case, for the sake of rapid delivery, only a special delivery person who is within a certain distance is notified using GPS information of the mobile phone of the special delivery person or base station information when the GPS information is not checked, and geographical information of a sender address or a sending request address. For example, special delivery persons who are within 1 km are notified in the case of the delivery persons walking with no vehicle, and special delivery persons who are within 3 km are notified in the case of the delivery persons using any vehicle.

Then, the delivery intentions of special delivery persons who meet the condition are checked in order of arrival through the applications (S23). Then, a delivery person in charge is designated from the delivery system (S24), and the designated delivery person in charge collects a product to be delivered at a delivery request address (S25). In this case, a delivery requester may pack the product in advance for delivery or the special delivery person may pack the product on the site.

Then, the special delivery person attaches a delivery label on the packed product after putting a delivery number together with sender and recipient information on the delivery label of the product, receives the confirmation of the delivery requester, and then photographs this state to upload it to the application (S26). The reason why the product to be delivered is photographed and uploaded is to be used as evidence about damage that may arise in the future.

In this case, the special delivery person attaches an IoT complex sensor module to a product to be delivered at a delivery starting point. The IoT complex sensor module generates first state information as the current state information of the product to transmit it to the delivery person terminal, and the delivery person terminal transmits the first state information to the delivery management server.

Then, the special delivery person delivers the product to a recipient at a destination, namely a recipient address, and then gets a recipient's signature through the application of the mobile phone of the special delivery person (S27). Then, product delivery completion is transmitted to the delivery system and the sender or the delivery requester is notified that the product is normally delivered. In this way, the delivery requester may check the delivery state of the product through the web page of the delivery system. However, unlike the checking method in an existing delivery system, namely the method of checking only a region in which a product is located, it is possible to check the delivery state of the product in real time. That is, since the application used by the special delivery person continues to provide GSP information, it is possible to check a specific place in which the product is located through the application in real time.

In this case, the IoT complex sensor module generates second state information as the current state information of the product having arrived at a delivery destination to transmit it to the delivery person terminal, and the delivery person terminal transmits the second state information to the delivery management server. Thus, the delivery management server may compare the first state information with the second state information to determine whether or not delivery is normally performed and provides a result of the determination to the recipient or the client terminal. The IoT complex sensor module is collected from the product by the special delivery person.

The above-mentioned process of delivering products is a delivery process at a short distance, for example, in a region such as Seoul, Suwon, Daegu, or Busan. However, long-distance product delivery, for example, the product delivery from Seoul to Daegu on the same day, is substantially impossible. It takes two days in a typical delivery system.

However, the delivery system according to the present invention enables products to be delivered on the same day since general persons are used as special delivery persons instead of the special delivery persons employed in the courier service.

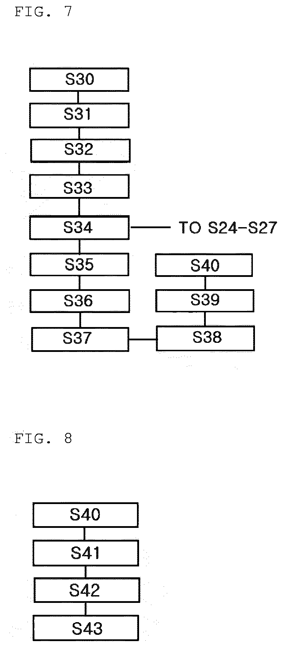

The long-distance delivery will be described below with reference to FIG. 7. For convenience of description, an example in which products are delivered from Nowon-gu, Seoul to Seo-gu, Daegu is described.

First, a person who wants to deliver a product accesses the delivery system of the present invention through a computer or a mobile phone Internet and then requests delivery (S30). As described above, information on a sender and a recipient, information on a product to be sent, and information on the price of the product to be sent are input. In this case, when a sender address differs from a delivery request address, the delivery request address is put. Then, a delivery number is provided from the delivery system to a delivery requester (S31).

Then, special delivery persons are notified through the dedicated delivery applications that a product to be delivered is in Seo-gu, Daegu (S32) . In this case, for the sake of rapid delivery, only a special delivery person who is within a certain distance is notified using GPS information of the mobile phone of the special delivery person or base station information when the GPS information is not checked, and geographical information of a sender address or a sending request address. If no special delivery person is within the certain distance, the process is performed to look for a special delivery person in a wider region.

Then, the delivery intentions of special delivery persons who meet the condition are checked in order of arrival through the applications (S33). If any special delivery person who meets the condition may directly deliver the product to Seo-gu, Daegu, the process proceeds to steps (S24 to S27) described above. That is, when a person moves from Daegu to Nowon-gu, Seoul on a business trip or on a personal matter and then return to Daegu, the person may receive a product in Nowon-gu, Seoul and then deliver the product to a recipient in Seo-gu, Daegu.

However, if one special delivery person may not deliver a product from Nowon-gu, Seoul to Seo-gu, Daegu, it is possible to deliver the product by interconnection of a plurality of special delivery persons.

First, special delivery persons are notified of a request to look for registered first special delivery persons who can perform delivery from a specific region, Seoul to Seo-gu, Daegu (S33).

Then, the delivery intention of a first special delivery person who can perform delivery from a specific region, Seoul to Seo-gu, Daegu is checked (S34).

Then, special delivery persons are notified of a request to look for second special delivery persons who can perform delivery to a specific region in which the first special delivery persons are, for example, an express bus terminal or a train station (S35).

Then, the delivery intention of a second special delivery person who can perform delivery to a specific region, Seoul is checked (S35), and the second special delivery person visits a delivery request address and collects a product to be delivered after photographing the product and uploading it (S36).

In this case, the second special delivery person attaches an IoT complex sensor module to a product to be delivered at a delivery starting point. The IoT complex sensor module generates first state information as the current state information of the product to transmit it to the delivery person terminal of the second special delivery person, and the delivery person terminal transmits the first state information to the delivery management server.

Then, after the first special delivery person meets with the second special delivery person in the specific region, the product is transferred between the first and second special delivery persons (S37). In this case, after checking whether or not the transferred product is normal through the uploaded product photograph, the acquisition/transfer completion of the product between the first and second special delivery persons is checked through the application (S38).

Then, after the first special delivery person transfers the product to a recipient in Seo-gu, Daegu and gets a recipient's signature, the delivery is completed (S39).

In this case, the IoT complex sensor module generates second state information as the current state information of the product having arrived at a delivery destination to transmit it to the delivery person terminal of first special delivery person, and the delivery person terminal of first special delivery person transmits the second state information to the delivery management server. Thus, the delivery management server may compare the first state information with the second state information to determine whether or not delivery is normally performed and provides a result of the determination to the recipient or the client terminal. The IoT complex sensor module is collected from the product by the first special delivery person.

As such, the product can be delivered to a long distance on the same day using a plurality of special delivery persons. Although an example of the special delivery person using the express bus terminal or the train station has been described above, special delivery persons using any aircraft may be used in the region in which aircrafts are launched. In addition, drivers who directly drive any vehicle, for example, passenger car drivers or truck drivers who come back from Seoul after product delivery may be used as special delivery persons.

Although an example in which two special delivery persons are used has been described above, three special delivery persons may be used such as a special delivery person for delivery to a specific region, Seoul, a special delivery person for delivery from a specific region, Seoul to a specific region, Daegu, and a special delivery person for delivery to a specific region, Daegu.

Meanwhile, a business transaction between individuals, for example, a used product transaction has been active in recent years. This used product transaction is performed through direct dealing or delivery service. However, this transaction is also performed through a so-called secure payment means because there is no trust between parties due to the characteristics of the used product transaction. However, in the case where the secure payment is used, payment and delivery are separately performed, the costs through secure payment is deposited after a considerable period, for example, 3-4 days even since the product has been delivered, and service costs are expensive. Hence, people selling products have tended to avoid the secure payment.

However, in the delivery system of the present invention, it is possible to simultaneously perform payment and delivery, perform delivery on the same day, and rapidly pay a cost.

The secure payment and the delivery system will be described below with reference to FIG. 8.

First, a purchaser decides to purchase a product through a sale page and deposits a purchase cost into the account of the delivery system (S40).

Then, special delivery persons are notified through the applications that there is a product to be delivered (S41). When a special delivery person for delivery is designated, the special delivery person collects the product from a seller (S41). In this case, the seller does not pack the product in advance, but the special delivery person packs the product. The special delivery person determines whether or not the product to be collected is normal based on information, namely photograph information and description, displayed on the sale page. When the product is determined to be normal, the special delivery person photographs or photographs the packed state of the product after packing the product, and then uploads the photographs.

In this case, the special delivery person attaches an IoT complex sensor module to a product to be delivered at a delivery starting point. The IoT complex sensor module generates first state information as the current state information of the product to transmit it to the delivery person terminal, and the delivery person terminal transmits the first state information to the delivery management server.

Then, after the special delivery person directly delivers the packed product to the purchaser, the special delivery person allows the purchaser to directly check whether or not the product is normal in the site and then determines it. When the product is normal, the special delivery person receives purchase confirmation from the purchaser through the application (S42).

In this case, the IoT complex sensor module generates second state information as the current state information of the product having arrived at a delivery destination to transmit it to the delivery person terminal, and the delivery person terminal transmits the second state information to the delivery management server. Thus, the delivery management server may compare the first state information with the second state information to determine whether or not delivery is normally performed and provides a result of the determination to the recipient or the client terminal. The IoT complex sensor module is collected from the product by the special delivery person.

Then, the delivery system allows the purchase cost except for a fee to be deposited into a seller's account on the same day or the next day (S43).

If the product is returned without purchase confirmation from the purchaser, a cost obtained by subtracting a delivery cost and a return cost from the deposit cost of the purchaser is deposited into the return account of the purchaser after the return is completed.

As described above, it is unnecessary for a relevant person to directly deliver a product through delivery service since the product is purchased and simultaneously delivered through the sale site, it is possible to prevent fake trade since it is determined whether or not the product is normal by the special delivery person, and it is possible to provide a cost of the product to the seller within a short time.

Meanwhile, in the case of current food delivery service, a variety of restaurants are guided on the web page of a food delivery service company, in which case when a customer selects a restaurant and food through the web page, the special delivery person of the food delivery service company visits the restaurant to collect the selected food and deliver it to the customer. In this case, it is disadvantageous in that the special delivery person has little money since the special delivery person takes a profit from the predetermined delivery charge paid from the restaurant instead of taking a service cost through the web page from the restaurant.

Thus, in the present invention, a food delivery web page is created and imaginary restaurants are made on the web page to give them to a desired restaurant. When a customer selects an imaginary restaurant, the imaginary restaurant is connected to the actual web page or blog of the restaurant, and the customer orders food from the actual web page or blog. Then, the ordered food is delivered by the special delivery person registered in the system in the above-mentioned manner.

In the market-linked delivery system according to the present invention, anyone can be designated as a delivery person when registered in the delivery management server through the delivery person terminal, thereby recruiting many delivery persons. Therefore, it is possible to increase a possibility of assigning an optimal delivery person to a specific delivery path and minimize a delivery time.

Moreover, since the delivery distance is divided into a plurality of paths even though it is long and a delivery person is recruited for each divided path, the same-day delivery service can be offered regardless of distance and the profit of the delivery person can be maximized by providing the delivery person with most of delivery costs.

In addition, it is possible to check a change in product state information in the delivery process through the accurate sensor data of the IoT complex sensor module and to clearly check whether or not the product is damaged in the delivery process.

While the present invention has been described with respect to the embodiments illustrated in the drawings, it will be obvious to those skilled in the art that such embodiments are provided by way of example only. It will be understood by those skilled in the art that various modifications and other equivalent embodiments may be made without departing from the spirit and scope of the invention as defined in the following claims.

Accordingly, the true technical protection scope of the present invention should be defined by technical concepts of the appended claims.

## Claims

1. A market-linked delivery system comprising:
a main server that performs registration and authentication of delivery persons and receives a delivery request for delivery to designate a delivery person for the delivery request and collect delivery status information of the delivery person for transmission of the delivery status information at the time of request;
a delivery person terminal that accesses the main server for data communication therewith to perform a delivery person registration process for delivery, to transmit delivery person designation intention information at the request of specific delivery to the main server, and to receive a delivery person designation notification from the main server;
a client terminal that accesses the main server for data communication therewith to request delivery of intended products and receive delivery information on the delivery request from the main server; and
an IoT complex sensor module that generates first state information, which is attached on a product to be delivered at a delivery starting point as the current state information of the product, to transmit the first state information to the delivery person terminal, and generates second state information, as the current state information of a product to be delivered at the time of arriving at a delivery destination, to transmit the second state information to the delivery person terminal,
wherein the main server comprises:
a delivery personnel management server that manages authentication and registration of delivery persons and delivery person designation through data transmission and reception with the delivery person terminal;
a delivery management server that manages delivery of a product at a customer's request through data transmission and reception with the client terminal; and
a payment management server that manages payment for delivery, settlement of delivery costs for delivery personnel, and payment and settlement according to B2B, B2P, and P2P,
wherein the delivery management server requests input of delivery information, which comprises a delivery destination, a delivery starting point, an intended delivery date and time, and a recipient, when there is a delivery request from the client terminal, and receives the delivery information when the delivery information is normally input, to generate a delivery number and provide the delivery number to the client terminal,
wherein the delivery management server transmits delivery information to the delivery personnel management server when it receives a delivery request from the client terminal,
wherein the delivery personnel management server transmits relevant delivery information and requests delivery person designation intention information to a plurality of registered delivery person terminals,
wherein the delivery personnel management server compares GPS information of the delivery person terminals or base station information with delivery information of a product to be delivered for rapid delivery to transmit the delivery information and request delivery person designation intention information to a delivery person terminal that is within a set distance from a delivery starting point or a delivery destination, and
wherein the delivery personnel management server divides an entire path into a plurality of paths when a delivery starting point and a delivery destination are farther than the set distance, to transmit delivery information and request delivery person designation intention information to a delivery person terminal for each relevant divided path.

2. The market-linked delivery system according to claim 1, wherein the IoT complex sensor module consists of a selected one of a temperature/humidity sensor, an impact sensor, an on-off sensor for determining whether a product delivering box is open or closed, and a crack sensor for detecting a crack of a product, or a combination thereof.

3. The market-linked delivery system according to claim 2, wherein the crack sensor comprises:
a slider body disposed at one side where a crack occurs;
a plurality of PIO ports spaced from the slider body;
a spring member fastened to one end of each of the PIO ports; and
a plurality of power terminals disposed at the other side where a crack occurs such that each of the power terminals comes into contact or non-contact with one end of the associated spring member depending on the movement of the spring member.

4. The market-linked delivery system according to claim 1, wherein the payment management server is connected to an external financial institution server to settle costs and perform any one of payment and settlement of delivery costs and payment and settlement of freight costs and delivery costs.

5. The market-linked delivery system according to claim 1, wherein when there is a delivery person registration request from a delivery person terminal, the delivery personnel management server transmits a specific personal code to the delivery person terminal when it requests input of identification information of a delivery person and registration of the delivery person is completed through the input identification information.

6. The market-linked delivery system according to claim 1, wherein when delivery person designation notification information is received to the delivery person terminal from the delivery personnel management server, a delivery label is attached on a product to be delivered when the product is collected after arriving at a delivery starting point and its image information is transmitted to the delivery management server through a dedicated delivery application.

7. The market-linked delivery system according to claim 6, wherein the delivery person terminal transmits signature information input from a recipient of a product to be delivered after arriving at a delivery destination to the delivery management server, and the delivery management server transmits delivery completion together with the signature information to the client terminal.

8. The market-linked delivery system according to claim 1, wherein when it is intended to designate delivery persons for a plurality of divided paths and delivery designation intention information of a first delivery person terminal which enables delivery through a partial path of the entire delivery path is received, the delivery personnel management server transmits delivery information and a request for delivery intention information to a delivery person terminal, which is within the set distance, for a remaining delivery path except for the above path.

9. The market-linked delivery system according to claim 8, wherein when first and second delivery person terminals are respectively designated for two divided paths and the first delivery person terminal meets with the second delivery person terminal, the first delivery person terminal transmits image information on a transferred product to the delivery management server to notify of transfer completion and the second delivery person terminal transmits image information on an acquired product to the delivery management server to notify of reception completion.

10. The market-linked delivery system according to claim 1, wherein in payment and settlement of freight costs and delivery costs, a product purchase cost and a delivery cost are settled in the payment management server from the client terminal, delivery request information is transmitted to the delivery management server such that the information is received through the delivery management server when the settlement is normally completed, delivery information is transmitted to the delivery personnel management server for delivery when the delivery information is normally input to the delivery management server, product purchase confirmation information is transmitted to the payment management server when the delivery is normally completed and the product purchase confirmation information is received from the client terminal, and the payment management server sends a product purchase cost of the costs settled from the client terminal to a relevant product seller.

11. The market-linked delivery system according to claim 10, wherein when the product purchase confirmation information is not received from the client terminal, the payment management server sends a cost except for the delivery cost of the costs settled from the client terminal through designated account information.

12. The market-linked delivery system according to claim 1, further comprising a market management server to provide franchise information to the client terminal.

13. The market-linked delivery system according to claim 12, wherein the market management server comprises a franchise management unit that lists up franchise information to be provided to the client terminal connected thereto, a payment management unit that manages a payment process for product information of a relevant franchise in connection with the payment management server when a purchase request occurs in the client terminal through the franchise information provided to the client terminal by the franchise management unit, and a delivery management unit that allows the product, which has been paid by the payment management unit, to be delivered according to the delivery information transmitted from the client terminal in connection with the delivery management server and the delivery personnel management server.

14. The market-linked delivery system according to claim 13, wherein the franchise management unit provides franchise information to the client terminal in the form of a web page, and the web page is configured such that a left or right banner space is defined on the page that performs functions such as delivery request or delivery person registration to output the franchise information to the banner space.

15. The market-linked delivery system according to claim 14, wherein the franchise management unit allows the banner space to be allocated to a franchise.
